# EUROPEAN PATENT APPLICATION

(11) **EP 4 553 258 A1**
(43) Date of publication of application: **14.05.2025**
(21) Application number: 24211906.3
(22) Date of filing: 08.11.2024
(51) Int. Cl.: E04H 17/00, A01G 9/02

(54) **FENCE POST TOPPER**

(30) Priority: 10.11.2023 GB 202317243
(71) Applicant: Gee, Tony, Lancashire WN5 7LN (GB)
(72) Inventor: Gee, Tony, Lancashire WN5 7LN (GB)
(74) Representative: HGF

(57) **Abstract**

A fence post topper comprises a main body (102) configured to accept a top portion of a fence post; and at least one attachment member (104) configured to accept at least part of a top portion of a fence panel, wherein the at least one attachment member extends laterally from the main body.

## Description

This invention relates to a fence post topper for use with fence posts and fence panels.

### BACKGROUND

Fence posts and fence panels can be prone to rotting, cracking and moss, due to the constant exposure to the elements. The existing fence post caps known in the art are widely used to prevent the fence post tops from rotting. They can be made of a variety of materials, such as plastic, metal, or a combination of both. Such fence post caps also have a decorative value and can protect the fence posts from wildlife, for example, to keep out pests. These fence post caps come in various shapes and sizes and are normally attached by either gluing or nailing to the topmost part of the fence post. Other types can be slotted on top of the fence post. The main disadvantage of the existing fence post caps is that they only protect the fence post from moisture and pests. They however do not protect the fence panels from exposure to precipitation.

In windy conditions, the fence panels are prone to rattling, which leads to eventual damage to the post and to the panel itself. In addition, the rattling of the fence panel fitted into slotted concrete posts produces an unpleasant sound. In order to avoid rattling, anti-rattle solutions are widely used. They come in different shapes and sizes and serve the purpose of filling the gap between the fence panel and the post slot. They can be attached by means of driving a screw or simply by wedging it into the position between the panel and the post. These anti-rattle devices do not protect the topmost part of the panel from rotting.

The topmost side of the panel can normally be protected by fence panel caps, wedges or rails that allow the water to drain away from the top of the panel. However, they do not protect from the water ingress between the side of the fence panel and the fence post which can damage the wooden vertical edge of the panel adjacent to the post as the water does not drain properly.

In addition, for some users, it is desirable to attract wildlife, such as birds or bats for example, and/or to have decorative elements such as planters attached to the panels. The fence planter or bird nesting boxes are either attached to the surface of the fence panel or are hung on the top using the brackets.

In order to protect the fence posts and panels from rotting due to water ingress and to prevent rattling, multiple attachments have to be sourced and used in combination. Hence, the user needs to consider the compatibility of each of the attachments with the post and the panels, as well as to check compatibility between the attachments. In addition, the user has to choose the location of the planter and/or the bird nesting box with respect to the protective attachments.

Hence, it is desirable to provide a fence post topper system that would at least mitigate one or more of the problems associated with the prior art.

### BRIEF SUMMARY OF THE DISCLOSURE

Aspects and embodiments of the invention provide a fence post topper, as claimed in the appended claims.

In accordance with the present invention there is provided a fence post topper comprising:
- a main body configured to accept a top portion of a fence post; and
- at least one attachment member configured to accept at least part of a top portion of a fence panel,
wherein the at least one attachment member extends laterally from the main body.

Advantageously, both the main body and at least one attachment member prevent water ingress onto and between the panel and the post, thus protecting the post, the top portion of the panel and the side portion of the panel from the rotting caused by the precipitation. Further advantageously, such an arrangement allows to prevent rattling of the panels during windy conditions as the panels are secured to the post by means of the at least one attachment member.

In an embodiment, the fence post topper further comprises a first receptacle attached to the main body and/or to the at least one attachment member. Advantageously, having a first receptacle provides an enclosed space that can be used as a decorative element and/or serve the purpose of wildlife preservation.

In an embodiment, the first receptacle is integrally formed with the main body and/or the at least one attachment member. Advantageously, by having the first receptacle integral with the main body and/or the at least one attachment member it is possible to provide a one-piece fence post topper that has the function of protection from the elements, securing the panels to avoid rattling and providing a wildlife nesting space.

In an embodiment, the first receptacle is removably attached to the main body and/or the at least one attachment member. Advantageously, it allows to possibility to remove the first receptacle when there is no need to provide a wildlife nesting space, for example in winter, but still to provide protection to the fence post and the fence panels.

In another embodiment, the first receptacle is attached by way of screws or clips.

In an embodiment, the first receptacle is a bird nesting box or a wildlife nesting box. Advantageously, this allows to provide wildlife with an enclosed space for roosting and protection from harsh weather and predators.

In an embodiment, the fence post topper further comprises a second receptacle, wherein the second receptacle is at least partially inserted into a top of the first receptacle. Advantageously, this allows a space-saving solution wherein two receptacles used for different purposes can be secured to the same main body and/or at least one attachment member.

In an embodiment, the second receptacle is a planter. Advantageously, this allows to provide an enclosure that can be used for trailing plants, flowers or herbs and for attracting wildlife, such as pollination insects, thus improving biodiversity around the fence area.

In an embodiment, the first receptacle comprises a rim configured to prevent ingress of fluids into the first receptacle. Advantageously, having a rim provides protection of the first receptacle from the water during adverse weather conditions or during watering of the plants in the planter.

In an embodiment, the first receptacle comprises a first bottom surface and the second receptacle comprises a second bottom surface, wherein the first and the second bottom surfaces are slanted with respect to an axis passing through the main body and the fence post to facilitate drainage. Advantageously, slanted surfaces of both the first and the second allow to provide drainage of fluids even when the post is tilted from its assumed vertical position.

In an embodiment, the second receptacle comprises a plurality of openings and the first receptacle comprises a plurality of vertical channels which, in use, are aligned with the plurality of openings to facilitate drainage. Advantageously, having a plurality of openings that are aligned with the channels allows to provide fluid drainage from the second receptacle without affecting the first receptacle.

In an embodiment, the main body comprises an attachment portion configured to receive an object. In another embodiment, the attachment portion is a socket comprising a plurality of restrictive features. In yet another embodiment, the object is a lamp or a decorative accessory. Advantageously, having a socket with restrictive features allow to safely secure a decorative element or a lamp to the main body of the fence post topper.

In an embodiment, the lamp is an LED light. In another embodiment, the lamp comprises a solar power pane. Advantageously, it allows to provide an energy-efficient and environmentally friendly solution to illuminate parts of the fenced area.

In an embodiment, the lamp comprises electrical connectors for connection to a mains power supply. Advantageously, it allows to power the lamp when it is not possible to install the solar power panel, for example in the shady part of the fenced area.

In an embodiment, the least one attachment member comprises an upper surface that is convex to assist drainage. Advantageously, it allows to facilitate drainage from the top of the attachment member. Further advantageously, the convex shape allows to accommodate uneven surfaces of the fence panel.

In an embodiment, the at least one attachment member comprises at least one opening configured to receive a fastening element for securing the top portion of the fence panel. Advantageously, it allows to secure the attachment member to the fence panel by means of screws or nails.

In an embodiment, the fence post topper comprises a material comprising any one of polypropylene (PP), high density polyethylene (HDPE), polypropylene ether (PPE) or polyethylene terephthalate (PET). In another embodiment, the material is recycled. Advantageously, using recycled polymers allows to reduce the need to extract and process new raw materials and to reuse existing plastics, thus conserving natural resources, saving energy and reducing greenhouse emissions.

In an embodiment, the fence post topper is an injection molded plastic.

In an embodiment, the first receptacle is at least partially transparent. Advantageously, having a partially transparent first receptacle allows to provide day-to-day observation of the wildlife nesting habits without disturbing their natural habitat.

### BRIEF DESCRIPTION OF THE DRAWINGS

One or more embodiments of the invention will now be described by way of example only, with reference to the accompanying drawings, in which:
Figure 1 shows an isometric view of the fence post topper according to an embodiment of the invention;
Figure 2 shows an isometric view of the fence post topper comprising first and second receptacles according to another embodiment of the invention;
Figure 3 shows an exploded isometric view of the embodiment depicted in Figure 2;
Figure 4 shows a cross-section view of a rim interacting with a lip portion;
Figure 5 shows a section view of the embodiment depicted in Figure 2;
Figure 6 shows a rear view of the embodiment depicted in Figure 2;
Figure 7 shows a top view of the embodiment depicted in Figure 2;
Figure 8 shows a rear view of the embodiment depicted in Figure 2;
Figure 9 shows an isometric view of the fence post topper comprising an attached object according to another embodiment of the invention;
Figure 10 shows an exploded section view of the embodiment depicted in Figure 9;
Figure 11 shows an isometric view of the fence post topper according to another embodiment of the invention; and
Figure 12 shows an isometric view of the fence post topper according to yet another embodiment of the invention.

### DETAILED DESCRIPTION

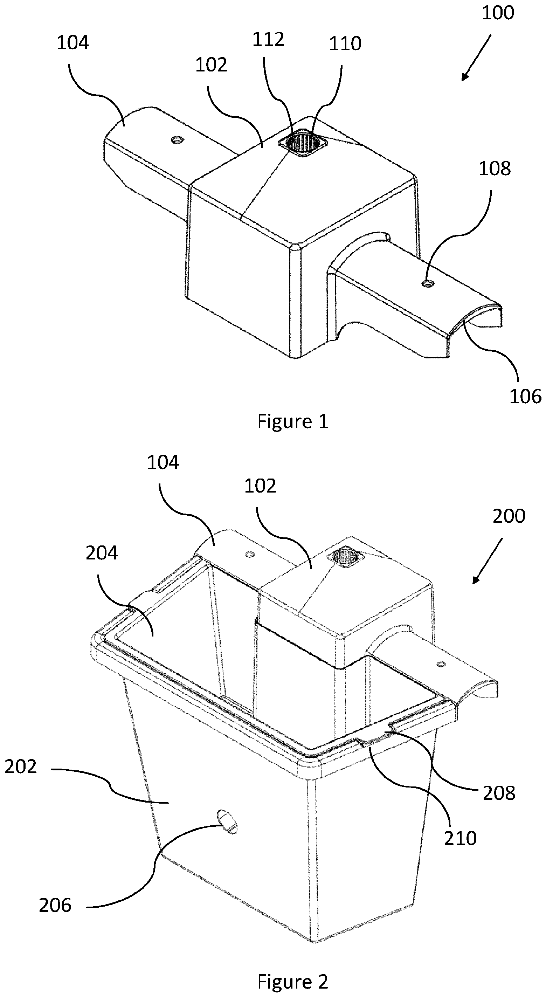

Figure 1 shows a fence post topper 100 according to the first embodiment of the present invention. The fence post topper comprises a main body 102 and at least one attachment member 104. It is understood that the number of attachment members 104 depends on where the fence post topper 100 needs to be installed. Thus, in the preferred embodiment, for the middle fence posts, two attachment members 104 are provided. For the end post only one attachment member 104 can be provided, whereas for the corner post three or four attachment members 104 positioned at a right angle to one another can also be provided.

In the preferred embodiment, two attachment members 104 are located on the opposite sides of the main body 102 such that the angle between the attachment members equals substantially 180 degrees. However, deviations from the 180-degree angle are also contemplated for a non-standard fence system where fence panels are angled to each other when the fenced area is of irregular shape. The attachment members 104 are positioned perpendicular to an axis passing through the main body and the fence post (not shown). However, it is also possible that the attachment members 104 are also inclined or slanted with respect to the axis to accommodate non-conventional fence panels.

Each of the attachment members 104 comprises a top portion 106 that has a convex shape configured to provide better ingress of water due to its upwardly bent shape. The attachment member 104 is attached to the main body 102 such that no gap is left between the main body 102 and the attachment member 104. This protects the area of the fence panel adjacent to the fence post from water ingress and, in turn, from rotting and cracking. It is understood that the at least one attachment member 104 is moulded integrally with the main body 102. It is further understood that the at least one attachment member covers at least part of the topmost part of the fence panel and can be, preferably, 75-100 mm long. However, longer or shorter attachment members are also contemplated.

The attachment member 104 further comprises at least one opening 108 configured to receive attachment means, such as a screw or nail to secure the attachment member 104 to the fence panel.

The main body 102 comprises an attachment portion 110 that is configured to accommodate an object such as a decorative element or lamp (not shown). The decorative element can be, for example, a flag, a post, or a finial. The attachment portion 110 can be, for example, a socket having a plurality of restrictive elements 112 that provide a tight fit to removably secure the object. Thus, in use, the object is placed into the attachment portion 110 and the force is applied to insert the object into the attachment portion. The inwardly protruding restrictive elements 112 engage with the object and securely keep it in position. Advantageously, the tight fit provided by the restrictive elements 112 allows the object to withstand adverse weather conditions, such as strong wind.

Figure 2 shows a fence topper 200 according to an alternative embodiment of the present invention. The reference numerals in Figure 2 are the same as described in Figure 1 and it is therefore understood that the elements with like-wise references perform substantially the same function. The fence topper 200 comprises the main body 102 and the at least one attachment member 104. It further comprises a first receptacle 202 and a second receptacle 204.

The first receptacle 202 can be, for example, a wildlife nesting box or a bird box. It has a substantially cuboid shape and comprises a front opening 206 for the wildlife to enter and exit the first receptacle. The second receptacle 204 can be, for example, a planter. It also has a substantially cuboid shape and, in use, is inserted into the fit receptacle 202, such that the tight fit is provided between the first 202 and the second 204 receptacles. The second receptacle is provided with a plurality of handles 208 that allow earlier removal of the second receptacle. It is also understood that the first receptacle comprises a plurality of matching notches 210 configured to accommodate the handles 208 and at the same time to prevent fluid ingress into the first receptacle 202. In one embodiment, the first receptacle 202 is removably attached to the main body 102 and/or the at least one attachment member 104. In an alternative embodiment, the first receptacle 202 is attached to the main body 102 and/or the at least one attachment member 104 by way of screws or clips.

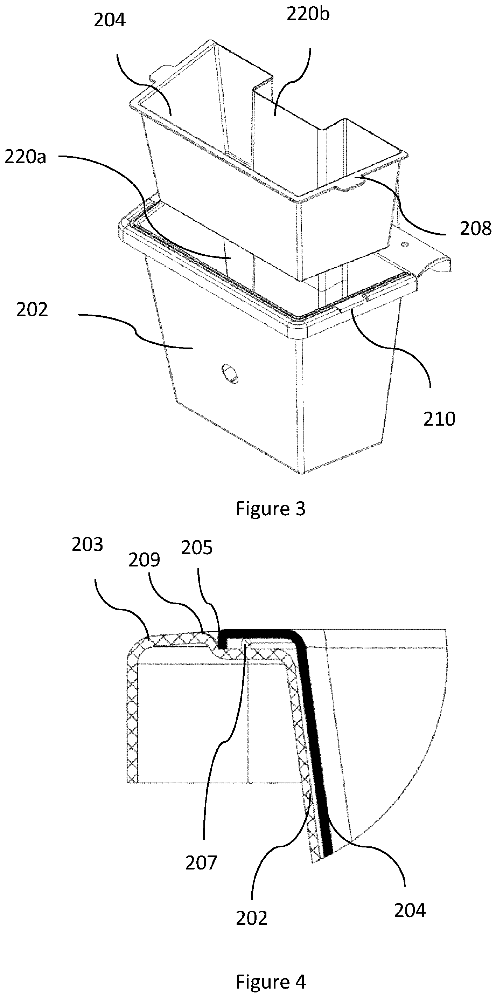

Figure 3 is an exploded view of the first 202 and second 204 receptacles, demonstrating how they interact when in use. Thus, it can be seen both of them have a downwardly tapered complementary shape. When the second receptacle 204 is placed into the first receptacle 202, the front, side and back surfaces of both receptacles are aligned. The handles 208 are also aligned with the notches 210. When soil and/or plants are placed into the second receptacle 204, the second receptacle is forced further downwards into the first receptacle 202, thus providing a tight fit between the top edges of both first and second receptacles, which in turn, prevents fluid ingress into the first receptacle 202.

Figure 4 shows a cross-sectional close-up view of an interaction between a lip portion 205 of the second receptacle 204 and a shoulder 209 of the first receptacle 202. Thus, in use, when the second receptacle 204 is placed inside the first receptacle 202, the lip portion 205 interacts with the shoulder 209 of an upwardly protruding portion 203, thus stopping water from entering into the first receptacle 202. Additionally, a rim 207 is provided on the first receptacle such that it interacts with the downside of the lip portion 205, thus sealing the gap between the first and the second receptacles and stopping water ingress into the first receptacle 202.

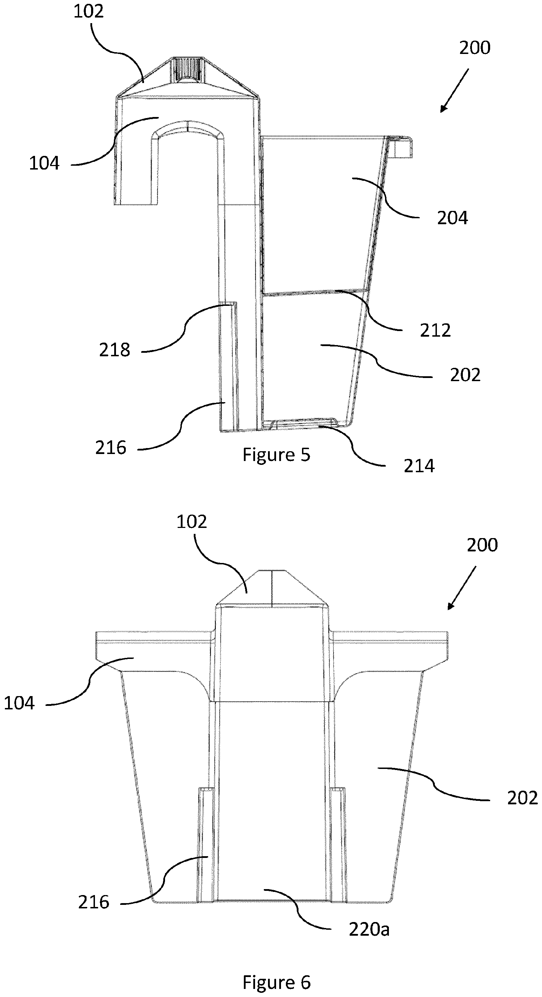

Figures 5 and 6 show the side section view and the back view of the fence post topper 200 according to one of the embodiments of the second invention. It can be seen that the first receptacle 202 comprises a plurality of vertical channels 216 that provide water ingress from the first receptacle 202. The second receptacle 204 comprises a plurality of drainage openings 218 that, in use, are aligned with the plurality of channels 216, and the fluid from the second receptacle 204 flows under gravity downwards into the vertical channels 216 of the first receptacle 202.

Both the first 202 and the second 204 receptacles comprise slanted bottom surfaces 212, 214. The slanted bottom surfaces are angled such that, in use, fluid flows freely towards the back wall of the first and/or second receptacle, thus preventing the stagnation of fluids in each of the receptacles. It will be understood that each of the slanted surfaces 212, 214 is angled with respect to the vertical axis passing through the main body 102 at an angle of between 2 and 5 degrees.

This, it will be understood that when the second receptacle is filled with water either due to watering the plants inside it or due to rainy conditions, the slanted surface 212 of the second receptacle 204 allows the water to move towards the back surface of the second receptacle and drain into the openings 218. The drainage openings 218 are aligned with the vertical channels 216, thus no water can enter the first receptacle 202.

It will be further understood from Figures 3 and 6 that the back surfaces of both first 202 and second 204 receptacles comprise a groove 220a, 220b. The groove 220a, 220 b is truncated at the top and widens towards the bottom of each receptacle to allow securing of the fence post topper 200 onto the fence post.

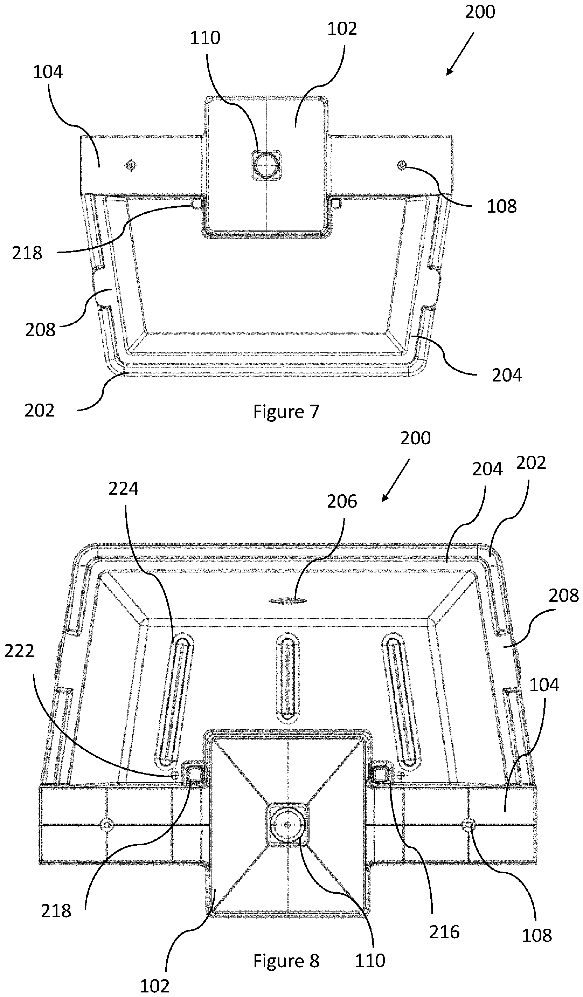

Figures 7 and 8 demonstrate the top and the bottom view of the fence post topper 200 according to an embodiment of the present invention. Thus, it can be seen how the drainage openings 218 are aligned with channels 216 to provide water ingress. Additional openings 222 are also provided in the bottom part of first receptacle 202. They are used to allow fluid drainage from the first receptacle. It will be understood that while the first receptacle is protected from any fluid ingress by means of a tight fit between the first and second receptacles, aligned channels 218 and openings 216 in combination with the slanted bottom surface 212, the fluid produced by nesting wildlife also needs to be removed. This is done by means of the additional openings 222. In addition, a plurality of raised elongated projections 224 formed on the slanted surface 214 of the first receptacle 202 provide elevation from the surface 214, thus promoting fluid drainage into the additional openings 222 as well as preventing rot by keeping the nest and/or wildlife inside the first receptacle 202 elevated from the surface and providing aeration of the area underneath the nest.

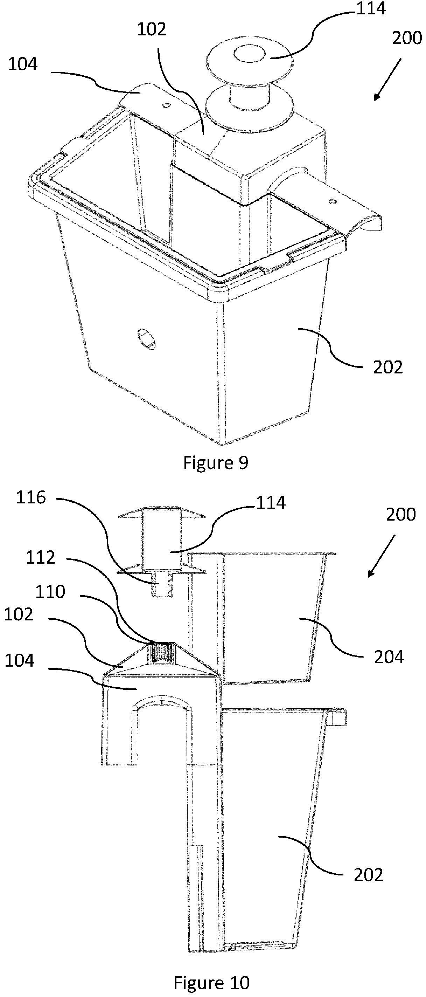

Figures 9 and 10 show an optional object 114 inserted into the attachment portion 110 of the main body 102. This object can be, for example, a lamp, a finial, a flag, or the like. A bottom portion 116 of the object 114 is pressed into the attachment portion 110 and the restrictive features 112 allow to keep the object 114 in position. Optionally, the bottom portion 116 of the object 114 can be screwed into the attachment portion. When the object is a lamp, it can comprise electrical connectors (not shown) for connection to a mains power supply or it can be powered by either the solar panels.

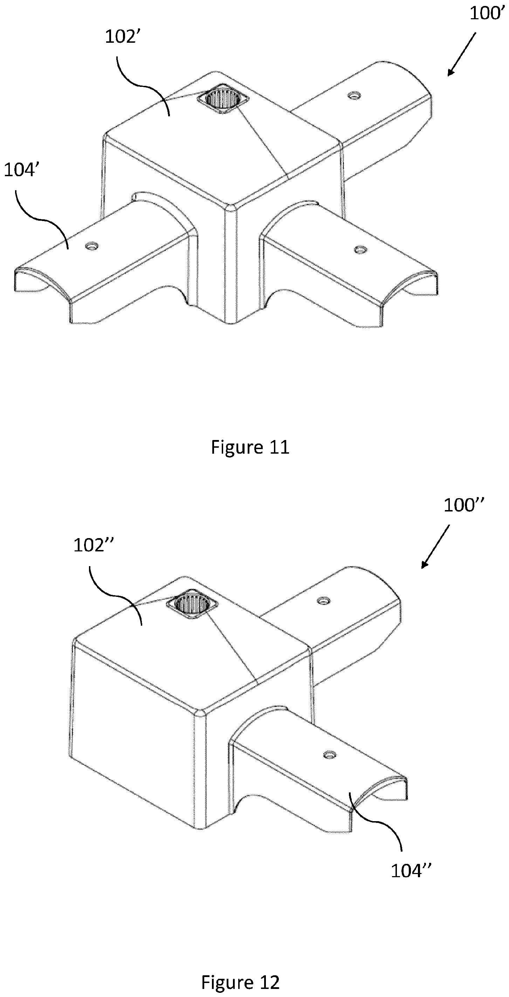

Figures 11 and 12 show the alternative embodiments of the present invention. Thus, in Figure 11 the fence post topper 100' comprises a main body 102' and three attachment members 104'. These three attachment members are positioned at 90 degrees with respect to one another, thus covering a three-way arrangement whereby three panels are connected or connectable by one fence post topper 100'. Figure 12, in turn, shows yet another embodiment of the present invention, whereby the fence post topper 100" comprises two attachment members positioned at 90 degrees with respect to one another, thus covering a two-way arrangement whereby two corner panels are connected or connectable by one fence post topper 100".

It will be understood that the fence post topper 100, 200 can be made by injection moulding from any of the following polymeric materials: polypropylene (PP), high-density polyethylene (HOPE), polypropylene ether (PPE) or polyethylene terephthalate (PET). It will be understood that the polymeric material can be recycled. Optionally, at least part of the first receptacle 202 can be made from polycarbonate, thus providing transparency of at least one of the walls of the first receptacle and allowing real-life wildlife observation without placing extra elements such as a camera into the first receptacle.

In use, the user places the fence post topper 100 onto the top of a fence post such that the main body 102 snugly fits onto the fence post. The at least one attachment member 104 is aligned with the topmost parts of the panels and covers the panels such that the gap between the fence panel and the post slot is fully protected from the water ingress. Optionally, the at least one attachment member 104 is screwed to the fence panels through the openings 108. Such an arrangement provides protection from water and mitigates rattling.

In an alternative embodiment, the fence topper 200 comprising at least a first receptacle 202 is placed onto the fence post in a manner described above. The first receptacle 202 can be used as a wildlife box. The second receptacle 204, which can be a planter for example, is then inserted into the first receptacle 202. The lip portion 205 of the second receptacle and the shoulder 209 of the first receptacle 202 provide a barrier that prevents water ingress into the first receptacle, thus keeping the wildlife protected from precipitation. The rim 207 interacts with the downside of the lip portion providing extra protection from the water ingress. The aligned channels 218 and openings 216 provide water drainage from the planter, thus maintaining healthy conditions for the vegetation in the planter and at the same time preventing water from the planter from entering the wildlife box.

Throughout the description and claims of this specification, the words "comprise" and "contain" and variations of them mean "including but not limited to", and they are not intended to (and do not) exclude other additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed.

### REFERENCE SIGNS

- 100, 200: fence post topper
- 102: main body
- 104: attachment member
- 106: top portion
- 108: opening
- 110: attachment potion
- 112: restrictive element
- 114: object
- 116: bottom portion
- 202: first receptacle
- 203: upwardly protruding portion
- 204: second receptacle
- 205: lip portion
- 206: front opening
- 207: rim
- 208: handle
- 209: shoulder
- 210: notch
- 212, 214: slanted surfaces
- 216: channel
- 218: drainage opening
- 220a,b: grooves
- 222: additional opening
- 224: projection

## Claims

1. A fence post topper comprising:
- a main body configured to accept a top portion of a fence post; and
- at least one attachment member configured to accept at least part of a top portion of a fence panel,
wherein the at least one attachment member extends laterally from the main body.

2. The fence post topper of claim 1, further comprising a first receptacle attached to the main body and/or to the at least one attachment member.

3. The fence post topper of claim 2, wherein the first receptacle is integrally formed with the main body and/or the at least one attachment member, or wherein the first receptacle is removably attached to the main body and/or the at least one attachment member.

4. The fence post topper of claim 3, wherein the first receptacle is attached by way of screws or clips.

5. The fence post topper of any one of claims 2 to 4, wherein the first receptacle is a bird nesting box or a wildlife nesting box.

6. The fence post topper of any one of claims 2 to 5, further comprising a second receptacle, wherein the second receptacle is at least partially inserted into a top of the first receptacle, optionally wherein the second receptacle is a planter.

7. The fence post topper of claim 6, wherein the first receptacle comprises a rim configured to prevent ingress of fluids into the first receptacle, or wherein the first receptacle comprises a first bottom surface and the second receptacle comprises a second bottom surface, wherein the first and the second bottom surfaces are slanted with respect to an axis passing through the main body and the fence post to facilitate drainage.

8. The fence post topper of any one of claims 6 to 7, wherein the second receptacle comprises a plurality of openings and the first receptacle comprises a plurality of vertical channels which, in use, are aligned with the plurality of openings to facilitate drainage.

9. The fence post topper of any preceding claim, wherein the main body comprises an attachment portion configured to receive an object, optionally wherein the attachment portion is a socket comprising a plurality of restrictive features.

10. The fence post topper of claim 9, wherein the object is a lamp or a decorative accessory, optionally wherein the lamp is an LED light.

11. The fence post topper of claim 10, wherein the lamp comprises a solar power panel, or wherein the lamp comprises electrical connectors for connection to a mains power supply.

12. The fence post topper of any preceding claim, wherein the least one attachment member comprises an upper surface that is convex to assist drainage, or wherein the at least one attachment member comprises at least one opening configured to receive a fastening element for securing the top portion of the fence panel.

13. The fence post topper of any preceding claim, wherein the fence post topper comprises a material comprising any one of polypropylene (PP), high density polyethylene (HDPE), polypropylene ether (PPE) or polyethylene terephthalate (PET), optionally wherein the material is recycled.

14. The fence post topper of claim 13, wherein the fence post topper is an injection molded plastic.

15. The fence topper of any one of claims 2 to 5, wherein the first receptacle is at least partially transparent.
